# EUROPÄISCHE PATENTSCHRIFT

(11) **EP 3 760 906 B1**
(45) Veröffentlichungstag und Bekanntmachung des Hinweises auf die Patenterteilung: **23.02.2022**
(21) Anmeldenummer: 20181918.2
(22) Anmeldetag: 24.06.2020
(51) Int. Cl.: F16L 11/22, F16L 39/02

(54) **MEHRLUMENSCHLAUCH UND ANSCHLUSSNIPPEL**
MULTI-LUMEN HOSE AND CONNECTING NIPPLE
TUYAU FLEXIBLE À PASSAGES MULTIPLES ET EMBOUT DE RACCORDEMENT

(30) Priorität: 02.07.2019 DE 102019209670
(43) Veröffentlichungstag der Anmeldung: 06.01.2021
(73) Patentinhaber: Hansgrohe SE, 77761 Schiltach (DE)
(72) Erfinder: Echtle, Klaus, 77787 Nordrach (DE); Glunk, Günter, 78737 Fluorn-Winzeln (DE); Herzog, Uwe, 77866 Rheinau/Diersheim (DE); Pflaumer, Thomas, 77933 Lahr (DE)
(74) Vertreter: Patentanwälte Ruff, Wilhelm, Beier, Dauster & Partner mbB

(56) Entgegenhaltungen:
- DE-A1- 19 825 553
- DE-U1- 29 700 126
- GB-A- 2 290 848

## Beschreibung

Die Erfindung bezieht sich auf einen Mehrlumenschlauchanschlussnippel und auf einen damit ausgerüsteten Mehrlumenschlauch, insbesondere zur Verwendung in der Sanitärtechnik als ein sanitärer Mehrlumenschlauch.

Mehrlumenschläuche, d.h. Schläuche, die in ihrem Inneren zwei oder mehr voneinander fluidgetrennte, sich über die Länge des Schlauchs erstreckende Lumina in Form entsprechender Hohlkanäle aufweisen, sind für bestimmte Anwendungen in der Sanitärtechnik und auf anderen Gebieten gebräuchlich. Mit einem solchen Schlauch können mehrere flüssige oder gasförmige Medien getrennt voneinander geführt werden, oder das jeweilige Lumen kann in anderer Weise genutzt werden, beispielsweise zum Durchführen von elektrischen Leitungen, optischen Fasern oder anderen Zwecken dienenden Stab-/Kabelelementen. Der vorliegende Mehrlumenschlauchanschlussnippel dient dazu, einen Anschluss an den Mehrlumenschlauch für wenigstens zwei der Schlauchlumina getrennt voneinander bereitzustellen, d.h. über den Nippel können wenigstens zwei der Lumina des Schlauchs getrennt voneinander an je eine eigene Fluidzuführung oder Fluidabführung angekoppelt werden.

Die Gebrauchsmusterschrift DE 297 20 516 U1 offenbart eine zur Kraftstoffabgabe an Tankanlagen dienende Schlaucharmatur mit einem Mehrlumenschlauch, in dessen Lumina einzelne Schlauchnippel einsteckbar sind, die unverlierbar in Bohrungen einer radialen Trennwand eines als Hülse ausgebildeten Kupplungs- und Klemmelements gehalten sind. Auf ihrer Klemmseite umgibt die Hülse den bis zur Trennwand einschiebbaren Schlauch und hält ihn klemmend fest, wozu ihr Innendurchmesser dort kleiner als der Schlauchaußendurchmesser ist. Auf ihrer Kupplungsseite ist in die Hülse ein Fixiereinsatz zum Festsetzen der Schlauchnippel einfügbar.

Die Offenlegungsschrift WO 2007/004050 A1 offenbart einen sanitären Zweilumenschlauch zur getrennten Führung von behandeltem Wasser und Leitungswasser, speziell zur entsprechenden wahlweisen Wasserversorgung eines daran anschließbaren Brausekopfs, wobei der Schlauch an seinen Enden mit jeweils einem passenden Zweilumenschlauchanschlussnippel versehen ist. Der Zweilumenschlauch ist vom Schlauchin-Schlauch-Typ mit einem Außenschlauch und einem in diesem aufgenommenen Innenschlauch, wobei die beiden Einzelschläuche je einzeln an einem von zwei koaxialen Anschlussstutzen des jeweiligen Nippels fixiert sind. Mit dem einen Nippel kann der Zweilumenschlauch drehfest mit dem Brausekopf gekoppelt werden, mit dem anderen Nippel kann er drehbeweglich an eine zugehörige Wasserzufuhr angekoppelt werden. Die Gebrauchsmusterschrift DE 297 08 873 U1 offenbart einen sanitären Zweilumen-Brauseschlauch mit zwei im Querschnitt halbmondförmigen Lumina und einen zugehörigen Zweilumenschlauchanschlussnippel mit einem Nippelbasisabschnitt, durch den sich zwei getrennte Fluidführungen jeweils zwischen einer ersten und einer zweiten Nippelanschlussseite hindurch erstrecken, und zwei mit dem Nippelbasisabschnitt einteiligen Schlauchlumeneinsteckstutzen, die sich an der ersten Nippelanschlussseite nebeneinander unter Belassung eines zwischenliegenden Schlauchlumenwandaufnahmeraums erstrecken, wobei ein Stutzeninnenraum jedes der beiden Schlauchlumeneinsteckstutzen zu jeweils einer der Fluidführungen gehört und axial ausmündet. Auf der zweiten Nippelanschlussseite münden die beiden Fluidführungen koaxial zueinander aus. Mit dem jeweiligen Anschlussnippel ist der Zweilumenschlauch zum einen an einen Brausekopf und zum anderen an eine zugehörige Wasserzufuhr anschließbar.

Die DE 29700126U1 offenbart einen Mehrlumenschlauchanschlussnippel gemäß dem Oberbegriff des Anspruchs 1.

Der Erfindung liegt als technisches Problem die Bereitstellung eines Mehrlumenschlauchanschlussnippels, der gegenüber dem oben erwähnten Stand der Technik insbesondere hinsichtlich seiner Funktionalität und/oder seines Herstellungsaufwands verbessert ist, sowie eines damit ausgerüsteten Mehrlumenschlauchs zugrunde.

Die Erfindung löst dieses Problem durch die Bereitstellung eines Mehrlumenschlauchanschlussnippels mit den Merkmalen des Anspruchs 1 sowie eines Mehrlumenschlauchs mit den Merkmalen des Anspruchs 8. Vorteilhafte Weiterbildungen der Erfindung sind in den Unteransprüchen angegeben.

Der erfindungsgemäße Mehrlumenschlauchanschlussnippel beinhaltet einen Nippelbasisabschnitt, durch den sich eine Mehrzahl von getrennten Fluidführungen jeweils zwischen einer ersten und einer zweiten Nippelanschlussseite hindurch erstrecken, eine Mehrzahl von mit dem Nippelbasisabschnitt einteiligen Schlauchlumeneinsteckstutzen und eine Stutzenverstrebungsstruktur für wenigstens einen der Schlauchlumeneinsteckstutzen. Die Schlauchlumeneinsteckstutzen erstrecken sich an der ersten Nippelanschlussseite nebeneinander unter Belassung eines zwischenliegenden Schlauchlumenwandaufnahmeraums, wobei ein Stutzeninnenraum jedes der Schlauchlumeneinsteckstutzen zu jeweils einer der Fluidführungen gehört und axial ausmündet. Die Stutzenverstrebungsstruktur befindet sich im Stutzeninnenraum wenigstens eines der Schlauchlumeneinsteckstutzen. Sie ist auf diese Weise in der Lage, den betreffenden Schlauchlumeneinsteckstutzen gegen radial nach innen wirkenden Druck zu verstreben, d.h. abzustützen. Dies vermeidet eine Deformation oder Schädigung des Schlauchlumeneinsteckstutzens aufgrund von radial nach innen wirkendem Klemmdruck, wie er typischerweise beim fluiddichten Festklemmen des Schlauchendes am eingesteckten Einsteckstutzen des Nippels entsteht.

Mit dieser Maßnahme kann durch Verwendung des erfindungsgemäßen Mehrlumenschlauchanschlussnippels folglich ein sicheres, fluiddichtes Ankoppeln eines Mehrlumenschlauchs realisiert werden. Hierzu kann insbesondere eine einzige Schlauchklemmung über den Außenumfang des Mehrlumenschlauchs genügen, der erfindungsgemäße Nippel erfordert keine separaten Abdichtmaßnahmen für die einzelnen Schlauchlumeneinsteckstutzen bzw. die zugehörigen Lumina des Mehrlumenschlauchs.

In einer Weiterbildung der Erfindung ist die Stutzenverstrebungsstruktur einteilig mit den Schlauchlumeneinsteckstutzen gebildet. Dies kann die Fertigung des Nippels vereinfachen. Insbesondere kann der Nippel in entsprechenden Ausführungen komplett als einteiliges Bauteil gefertigt sein.

In einer Weiterbildung der Erfindung beinhaltet die Stutzenverstrebungsstruktur in wenigstens einem der Stutzeninnenräume eine Stützstrebe, die sich mit radialer Hauptrichtungskomponente zwischen zwei radial gegenüberliegenden Wandabschnitten des betreffenden Schlauchlumeneinsteckstutzens erstreckt. Dies ergibt eine effiziente Abstützfunktion für den betreffenden Stutzeninnenraum gegen radial von außen einwirkendem Druck mit relativ geringem Fertigungsaufwand.

In einer Weiterbildung der Erfindung sind die Schlauchlumeneinsteckstutzen innerhalb einer kreis- oder ovalförmigen Begrenzungslinie angeordnet. Diese Nippelkonfiguration erleichtert eine effiziente Fertigung des Nippels, und bei Ankopplung eines entsprechend konfigurierten Mehrlumenschlauchs kann eine einzige Schlauchklemmung längs dieser Begrenzungslinie genügen, um eine sichere fluiddichte Verbindung aller Schlauchlumeneinsteckstutzen mit den zugehörigen Lumina des Mehrlumenschlauchs zu erzielen.

In einer Ausgestaltung der Erfindung sind die Schlauchlumeneinsteckstutzen mit sektorförmigem Querschnitt in Umfangsrichtung nebeneinander innerhalb der kreis- oder ovalförmigen Begrenzungslinie angeordnet. Diese Stutzengestaltung kann für entsprechende Anwendungen vorteilhaft sein, insbesondere bei Verwendung eines Mehrlumenschlauchs mit korrespondierend sektorfömigem Querschnitt seiner Lumina.

In einer Weiterbildung der Erfindung mündet eine erste der Fluidführungen an der zweiten Nippelanschlussseite axial aus, während eine zweite der Fluidführungen an der zweiten Nippelanschlussseite radial ausmündet. Dies kann für entsprechende Anschlusskonfigurationen vorteilhaft Verwendung finden.

In einer Ausgestaltung der Erfindung weist der Nippelbasisabschnitt an der zweiten Nippelanschlussseite einen konischen Bereich auf, an dem die zweite Fluidführung radial ausmündet und von dem aus sich axial ein Nippelanschlussstutzen erstreckt, durch den die erste Fluidführung axial ausmündet. Auch dies lässt sich vorteilhaft für entsprechende Anschlusskonfigurationen einsetzen.

Der erfindungsgemäße Mehrlumenschlauch weist einen Mehrlumenschlauchkörper mit einer Mehrzahl von getrennten Schlauchlumina sowie eine Anschlusseinheit an einem Ende des Mehrlumenschlauchkörpers auf, wobei die Anschlusseinheit einen erfindungsgemäßen Mehrlumenschlauchanschlussnippel beinhaltet, der mit seinen Schlauchlumeneinsteckstutzen in jeweils eines der mehreren Schlauchlumina des Mehrlumenschlauchkörpers eingesteckt ist. Des Weiteren beinhaltet die Anschlusseinheit eine Presshülse, die den Mehrlumenschlauchkörper in einem die eingesteckten Schlauchlumeneinsteckstutzen aufnehmenden Endbereich gegen diese anpressend umgibt. Dies realisiert eine vorteilhaft einfache und funktionssichere Verkopplung des Mehrlumenschlauchanschlussnippels mit dem Mehrlumenschlauchkörper, wofür bereits eine einzige Presshülse genügt, die den Mehrlumenschlauchkörper insgesamt umgibt. Es ist nicht erforderlich, die Schlauchlumeneinsteckstutzen des Nippels einzeln mit dem jeweiligen Lumina des Mehrlumenschlauchkörpers fluiddicht zu verbinden. Die Stutzenverstrebungsstruktur des Nippels sorgt für ausreichende Formstabilität des betreffenden Schlauchlumeneinsteckstutzens gegenüber den durch die Presshülse ausübbaren Pressdruck zur fluiddichten Kopplung von Nippel und Schlauchkörper. Optional kann der Mehrlumenschlauch an beiden Enden mit einer derartigen Anschlusseinheit ausgerüstet sein.

In einer Weiterbildung der Erfindung weist der Nippelbasisabschnitt einen radial nach außen abstehenden Anschlagflansch auf, gegen den die Presshülse und/oder das Ende des Mehrlumenschlauchkörpers axial anliegt. Die Anschlusseinheit beinhaltet eine Überwurfanschlussmutter, die sich mit einer Anschlagschulter gegen den Anschlagflansch abstützt. Diese Konfiguration lässt sich mit Vorteil für Fälle verwenden, bei denen der Mehrlumenschlauch mittels der Überwurfanschlussmutter an eine weitere Systemkomponente angeschlossen werden soll, z.B. bei Sanitäranwendungen an einen Brausekörper oder eine mehrkanalige Wasserzufuhr.

Vorteilhafte Ausführungsformen der Erfindung sind in den Zeichnungen dargestellt. Diese und weitere Ausführungsformen der Erfindung werden nachfolgend näher beschrieben. Hierbei zeigen:
- Fig. 1: eine Seitenansicht eines Mehrlumenschlauchanschlussnippels in einer Zweilumenausführung,
- Fig. 2: die Seitenansicht von Fig. 1 um 90° gedreht,
- Fig. 3: eine Längsschnittansicht längs einer Linie III-III in Fig. 2,
- Fig. 4: eine Draufsicht auf eine erste Anschlussseite des Nippels der Fig. 1 bis 3,
- Fig. 5: eine Draufsicht auf eine zweite Anschlussseite des Nippels,
- Fig. 6: eine Seitenansicht eines Mehrlumenschlauchs in einer Zweilumenausführung mit beidseitiger Anschlusseinheit unter Verwendung je eines Nippels gemäß den Fig. 1 bis 5,
- Fig. 7: eine Schnittansicht längs einer Linie VII-VII in Fig. 6,
- Fig. 8: eine Schnittansicht längs einer Linie VIII-VIII in Fig. 6,
- Fig. 9: eine Perspektivansicht eines Zweilumenschlauchkörpers für den Mehrlumenschlauch der Fig. 6 bis 8,
- Fig.10: die Perspektivansicht von Fig. 9 mit beidseits montierten Nippeln,
- Fig. 11: die Perspektivansicht von Fig. 10 mit zusätzlich angebrachten Presshülsen,
- Fig. 12: eine schematische Querschnittdarstellung eines alternativ verwendbaren Zweilumenschlauchkörpers mit wellenförmig statt geradlinig verlaufender Lumentrennwand,
- Fig. 13: die Ansicht von Fig. 12 für eine weitere Zweilumenschlauchkörpervariante mit mittig geschwächter Lumentrennwand,
- Fig. 14: die Ansicht von Fig. 12 für eine weitere Zweilumenschlauchkörpervariante mit einem kreisförmigen und einem sichelförmigen Lumen,
- Fig. 15: die Nippelansicht von Fig. 4 zu einer für den Einsatz beim Schlauchkörper gemäß Fig. 14 geeigneten Nippelvariante und
- Fig. 16: die Ansicht von Fig. 15 zu einer Nippelvariante für die Verwendung bei einem Dreilumenschlauch mit sektorförmigen Lumina.

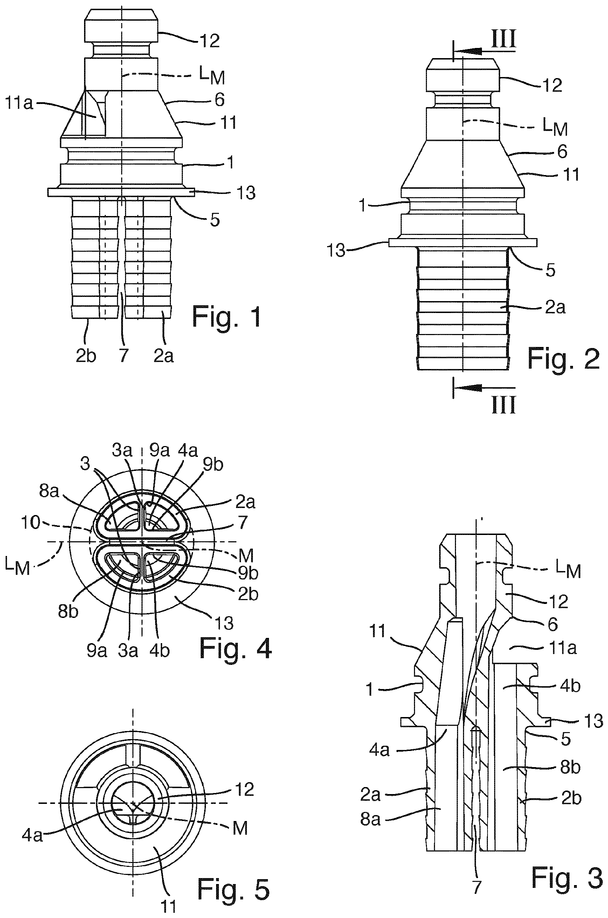

Die Fig. 1 bis 5 zeigen einen Mehrlumenschlauchanschlussnippel in einer beispielhaften Zweilumenausführung. Der Nippel weist einen Nippelbasisabschnitt 1, eine Mehrzahl von mit dem Nippelbasisabschnitt 1 einteiligen Schlauchlumeneinsteckstutzen 2a, 2b und eine Stutzenverstrebungsstruktur 3 auf. Mehrere getrennte Fluidführungen 4a, 4b erstrecken sich jeweils zwischen einer ersten Nippelanschlussseite 5 und einer zweiten Nippelanschlussseite 6 durch den Nippelbasisabschnitt 1 hindurch. Die Schlauchlumeneinsteckstutzen 2a, 2b erstrecken sich an der ersten Nippelanschlussseite 5 nebeneinander unter Belassung eines zwischenliegenden Schlauchlumenwandaufnahmeraums 7. Ein Stutzeninnenraum 8a, 8b jedes der Schlauchlumeneinsteckstutzen 2a, 2b gehört zu jeweils einer der Fluidführungen 4a, 4b und mündet axial aus.

Die Stutzenverstrebungsstruktur 3 befindet sich im Stutzeninnenraum 8a, 8b wenigstens eines der Schlauchlumeneinsteckstutzen 2a, 2b, im gezeigten Beispiel im Stutzeninnenraum 8a, 8b beider, d.h. aller, Schlauchlumeneinsteckstutzen 2a, 2b, in alternativen Ausführungen nur in einem Teil aller Schlauchlumeneinsteckstutzen 2a, 2b. Durch die Stutzenverstrebungsstruktur 3 besitzt der betreffende Stutzeninnenraum 8a, 8b eine erhöhte Druckfestigkeit insbesondere gegenüber radial von außen nach innen wirkenden Rest-/Klemmdrücken, wie sie typisch bei der üblichen Verpressung bzw. Verklemmung eines Schlauchendes an einer Anschlusseinheit, wie einem Nippel, auftreten.

In entsprechenden Ausführungen ist die Stutzenverstrebungsstruktur 3 wie im gezeigten Beispiel einteilig mit den Schlauchlumeneinsteckstutzen 2a, 2b gebildet. Vorteilhaft kann hierbei der Nippel wie im gezeigten Beispiel insgesamt einteilig gebildet sein, z.B. aus einem hierzu an sich gängigen Kunststoffmaterial und beispielsweise als in Kunststoffspritzgießtechnik hergestelltes Bauteil. in alternativen Ausführungen besteht er aus zwei oder mehr Einzelteilen, in letzterem Fall beispielsweise durch ein oder mehrere zusätzliche, an der zweiten Nippelanschlussseite 6 an den Nippelbasisabschnitt 1 angebrachten Bauteilen. In der Regel hat jedoch die komplett einteilige Fertigung des Nippels Vorteile hinsichtlich Erzielung eines geringen Herstellungsaufwands.

In entsprechenden Ausführungen beinhaltet die Stutzenverstrebungsstruktur 3 wie im gezeigten Beispiel in wenigstens einem der Stutzeninnenräume 8a, 8b eine Stützstrebe 3a, die sich mit radialer Hauptrichtungskomponente zwischen zwei radial gegenüberliegenden Wandabschnitten 9a, 9b des betreffenden Schlauchlumeneinsteckstutzens 2a, 2b erstreckt. Mit einer solchen Stützstrebe 3a lässt sich die Druckfestigkeit des betreffenden Schlauchlumeneinsteckstutzens 2a, 2b sehr effektiv steigern, ohne dass die Stutzenverstrebungsstruktur 3 den Fluiddurchfluss durch den Stutzeninnenraum 8a, 8b merklich stört. Im gezeigten Beispiel verläuft die jeweilige Stützstrebe 3a radial, d.h. jeweils entlang eines Radiusstrahls von einem im Querschnitt der Fig. 4 mittigen Punkt M nach außen, in alternativen Ausführungen schräg zur Radialrichtung. In weiteren alternativen Ausführungen ist die Stutzenverstrebungsstruktur 3 anders gestaltet, beispielsweise unter Verwendung einer oder mehrerer im Wesentlichen in Umfangsrichtung geeignet gebogen bzw. gekrümmt verlaufender Stützstreben. Die Stützstrebe 3a ist so dimensioniert, dass sie den Querschnitt des betreffenden Stutzeninnenraums 8a, 8b nicht wesentlich verringert und daher den Fluidfluss im Stutzeninnenraum 8a, 8b nicht beeinträchtigt. Axial kann sich die Stützstrebe 3a je nach Bedarf über die gesamte Länge des betreffenden Einsteckstutzens 2a, 2b oder nur über einen Teil davon erstrecken, in entsprechenden Ausführungen auch in Form mehrerer axial voneinander beabstandeter Stützstrebenabschnitte. In jedem Fall verursacht die Stutzenverstrebungsstruktur 3 keine durchgehende Aufteilung der jeweiligen Fluidführung 4a, 4b in mehrere getrennte Fluidführungen, sondern belässt die jeweilige Fluidführung 4a, 4b einheitlich bzw. ungeteilt/unverzweigt.

In entsprechenden Ausführungen sind die Schlauchlumeneinsteckstutzen 2a, 2b wie im gezeigten Beispiel innerhalb einer kreis- oder ovalförmigen Begrenzungslinie 10 angeordnet, z.B. wie gezeigt mit sektorförmigem Querschnitt in Umfangsrichtung nebeneinander. Damit ist der Nippel an eine entsprechende Lumengestaltung eines Mehrlumenschlauchs angepasst, für dessen Anschluss er dient, und entlang der gemeinsamen Begrenzungslinie 10 der Schlauchlumeneinsteckstutzen 2a, 2b kann eine gemeinsame Verpressung bzw. Verklemmung des Schlauchanschlusses erfolgen. Bei der gezeigten Zweilumenausführung ist der sektorförmige Querschnitt wie dargestellt ein halbkreisförmiger bzw. halbmondförmiger Querschnitt.

In entsprechenden Ausführungen mündet eine erste Fluidführung 4a der beiden Fluidführungen 4a, 4b an der zweiten Nippelanschlussseite 6 axial aus, und eine zweite Fluidführung 4b der Fluidführungen 4a, 4b mündet an der zweiten Nippelanschlussseite 6 radial aus. In alternativen Ausführungen können beispielsweise beide Fluidführungen 4a, 4b an der zweiten Nippelanschlussseite 6 axial ausmünden, z.B. koaxial zueinander.

In entsprechenden Ausführungen weist wie beim gezeigten Beispiel der Nippelbasisabschnitt 1 an der zweiten Nippelanschlussseite 6 einen konischen Bereich 11 auf, an dem die zweite Fluidführung 4b radial ausmündet und von dem aus sich axial ein Nippelanschlussstutzen 12 erstreckt, durch den die erste Fluidführung 4a axial ausmündet. Die radiale Ausmündung der zweiten Fluidführung 4b am konischen Bereich 11 beinhaltet eine entsprechende Mündungsöffnung 11a im konischen Bereich 11. Durch die Konizität dieses Bereichs 11 kann die radiale Nippelausmündung unter Verwendung einer geeigneten ankoppelnden Anschlusshülse bei Bedarf in einen zur ersten Fluidführung 4a koaxiale Weiterleitung der zweiten Fluidführung 4b umgelenkt werden.

In entsprechenden Ausführungen weist der Nippel wie im gezeigten Beispiel an seinem Nippelbasisabschnitt 1 einen radial nach außen abstehenden Anschlagflansch 13 auf. Dieser kann insbesondere als Anschlag für einen auf die Einsteckstutzen 2a, 2b aufzusteckenden Mehrlumenschlauch dienen.

In entsprechenden Ausführungen sind die Einsteckstutzen 2a, 2b wie beim gezeigten Beispiel symmetrisch zu einer Längsmittenachse L_{M} des Nippels angeordnet, und der Nippelanschlussstutzen 12 auf der zweiten Nippelanschlussseite 6 erstreckt sich mittig zu dieser Längsmittenachse L_{M}. Dementsprechend besitzt die zugehörige erste Fluidführung 4a einen schräg zur Axialrichtung verlaufenden Abschnitt im konischen Bereich 11 des Nippelbasisabschnitts 1 zwischen dem zugehörigen Schlauchlumeneinsteckstutzen 2a auf der ersten Anschlussseite 5 und dem mittigen Nippelanschlussstutzen 12 auf der zweiten Anschlussseite 6.

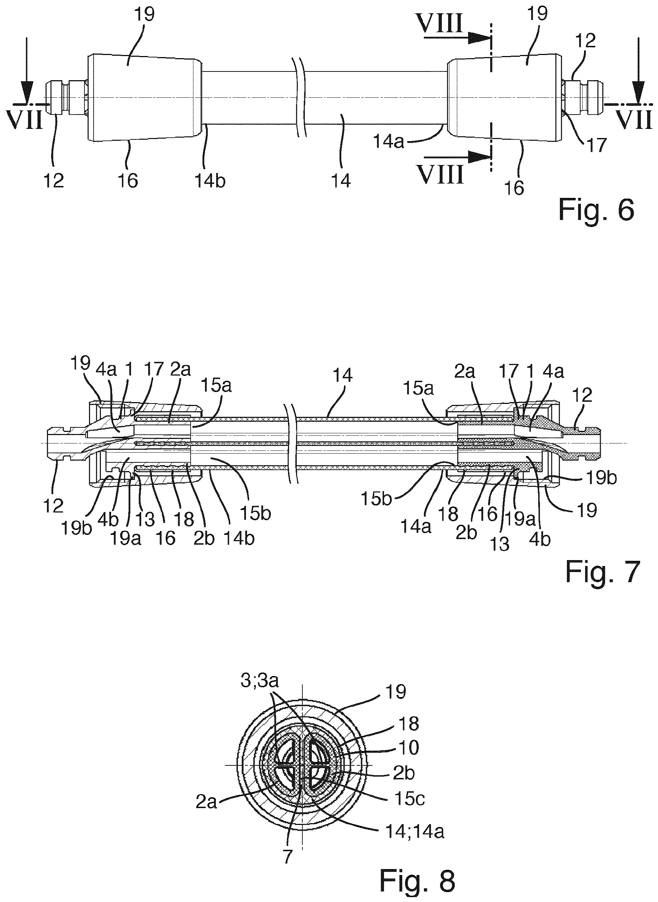

Der in den Fig. 6 bis 11 gezeigte Mehrlumenschlauch beinhaltet einen Mehrlumenschlauchkörper 14 mit einer Mehrzahl von getrennten Schlauchlumina 15a, 15b sowie eine Anschlusseinheit 16 an einem Ende 14a des Mehrlumenschlauchkörpers 14. Optional ist wie im gezeigten Beispiel die Anschlusseinheit 16 auch am anderen Ende 14b des Mehrlumenschlauchkörpers 14 vorgesehen. Die jeweilige Anschlusseinheit 16 beinhaltet einen erfindungsgemäßen Mehrlumenschlauchanschlussnippel 17, der mit seinen Schlauchlumeneinsteckstutzen 2a, 2b in jeweils eines der mehreren Schlauchlumina 15a, 15b des Mehrlumenschlauchkörpers 14 eingesteckt ist und bei dem es sich insbesondere um einen Nippel in der gezeigten Realisierung der Fig. 1 bis 5 oder einer der dazu alternativen, oben erwähnten Realisierungen handeln kann.

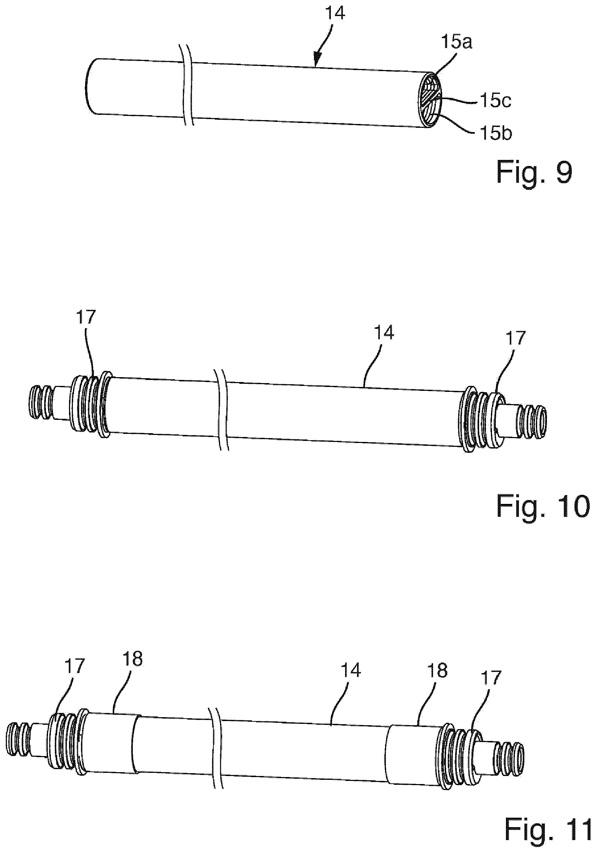

Des Weiteren beinhaltet die Anschlusseinheit 16 eine Presshülse 18, die den Mehrlumenschlauchkörper 14 in einem die eingesteckten Schlauchlumeneinsteckstutzen 2a, 2b aufnehmenden Endbereich gegen diese anpressend umgibt. Die Fig. 9 bis 11 veranschaulichen hierzu eine Fertigungsreihenfolge mit zunächst dem bloßen Mehrlumenschlauchkörper 14 gemäß Fig. 9, dem jeweils endseitig angebrachten Mehrlumenschlauchanschlussnippel 17 gemäß Fig. 10 und der anschließend angebrachten Presshülse 18 zum fluiddichten Verpressen der Verbindung von Mehrlumenschlauchkörper 14 und Mehrlumenschlauchanschlussnippel 17.

Wie insbesondere aus den Fig. 7 und 8 ersichtlich, erstreckt sich die Presshülse 18 längs der oben erwähnten Begrenzungslinie 10 der Schlauchlumeneinsteckstutzen 2a, 2b gemeinsam um letztere und das diese umgebende Schlauchmaterial herum, wobei zusätzlich eine im gezeigten Beispiel des Mehrlumenschlauchkörpers 14 von Fig. 9 geradlinige Lumentrennwand 15c im Schlauchlumenwandaufnahmeraum 7 zwischen den Schlauchlumeneinsteckstutzen 2a, 2b aufgenommen ist. Insgesamt wird dadurch mit sehr geringem Aufwand unter Verwendung nur der einen Presshülse 18 eine sehr zuverlässige fluiddichte Verbindung der jeweiligen Anschlusseinheit 16 und insbesondere des jeweiligen Nippels 17 mit dem Endbereich des Mehrlumenschlauchkörpers 14 erzielt. Die Stutzenverstrebungsstruktur 3 sorgt für eine ausreichende Druckstabilität des jeweiligen Schlauchlumeneinsteckstutzens 2a, 2b, so dass letzterer durch das Verpressen bzw. Verklemmen des Schlauchmaterials mit und am Nippel 17 nicht verformt oder gar beschädigt wird. Um das Festhalten des aufgesteckten Schlauchmaterials zu unterstützen, sind die Stutzen 2a, 2b an ihrer Außenoberfläche vorzugsweise rundherum optional wie im gezeigten Beispiel mit einem entsprechenden Festhalteprofil versehen, wie einem sägezahn- oder tannenbaumartigen Profil.

In entsprechenden Ausführungen weist die Anschlusseinheit 16 wie im gezeigten Beispiel eine Überwurfanschlussmutter 19 auf, die sich mit einer Anschlagschulter 19a gegen den Anschlagflansch 13 des Nippels 17 abstützt. Durch die Überwurfanschlussmutter 19 kann der mit der Anschlusseinheit 16 versehene Mehrlumenschlauch in gewünschter Weise an eine weitere Systemkomponente angeschlossen werden, z.B. im Fall von Sanitäranwendungen an einen Brausekörper oder eine mehrkanalige Wasserzufuhr. Zur Verbindung mit der anzukoppelnden Systemkomponente weist die Überwurfanschlussmutter 19 ein geeignetes Kopplungsmittel auf, im gezeigten Beispiel ein Innengewinde 19b.

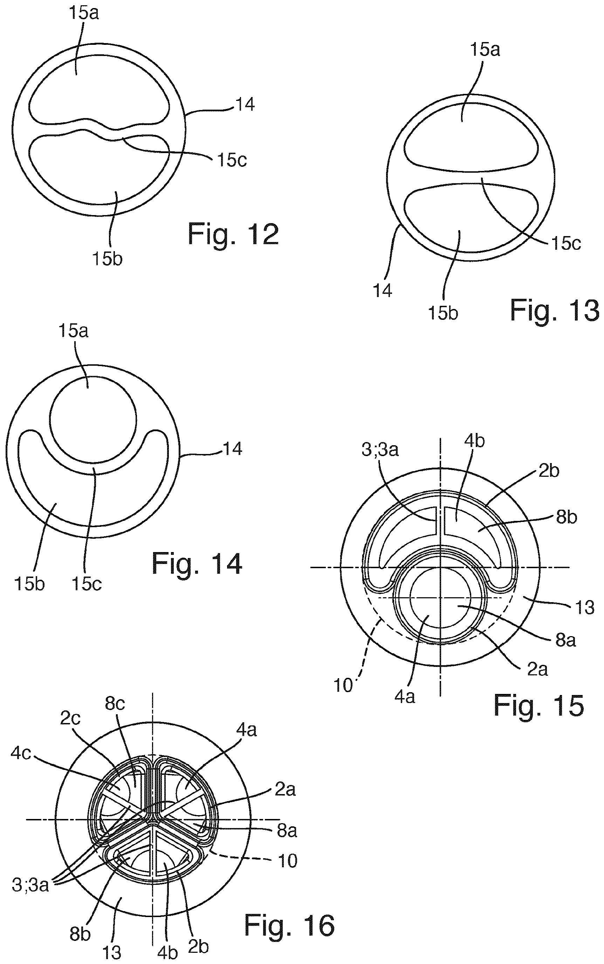

Die Fig. 12 bis 14 veranschaulichen alternative Gestaltungen für den Mehrlumenschlauchkörper 14 in einer jeweiligen schematischen Querschnittansicht, insbesondere bezüglich der Gestaltung der Lumina 15a, 15b bzw. der Lumentrennwand 15c. Im Ausführungsbeispiel von Fig. 12 ist die Lumentrennwand 15c wellenförmig statt wie in der Ausführung von Fig. 9 geradlinig ausgebildet. In der Ausführungsvariante von Fig. 13 besitzt die Lumentrennwand 15c eine variable, sich zum Mittenbereich hin verringernde Breite. Diese Ausführungsvarianten können zur Erzielung eines gewünschten Biegeverhaltens des Mehrlumenschlauchkörpers 14 im Vergleich zur geradlinigen Lumentrennwand 15c von Fig. 9 von Vorteil sein.

In der Ausführungsvariante von Fig. 14 sind die beiden Schlauchlumina 15a, 15b nicht mehr jeweils halbmondförmig gebildet, sondern besitzen voneinander verschiedene Querschnittsformen. Speziell ist das eine Lumen, z.B. das Lumen 15a, von kreisrundem Querschnitt, während das andere Lumen, z.B. das Lumen 15b, einen sichelförmigen Querschnitt aufweist. Entsprechend liegt in diesem Beispiel ein bogenförmiger Verlauf für die Lumentrennwand 15c vor.

Fig. 15 zeigt in der entsprechenden Draufsicht auf die erste Anschlussseite 5 eine zur Gestaltung des Mehrlumenschlauchkörpers 14 gemäß Fig. 14 passende Gestaltung eines zugehörigen Mehrlumenschlauchanschlussnippels, der im Übrigen von einem der oben zu den Fig. 1 bis 5 erläuterten Ausführungsvarianten sein kann. Beim Nippel von Fig. 15 besitzt entsprechend der eine Schlauchlumeneinsteckstutzen, z.B. der Schlauchlumeneinsteckstutzen 2a, einen kreisförmigen Querschnitt, während der andere Schlauchlumeneinsteckstutzen, z.B. der Schlauchlumeneinsteckstutzen 2b einen sichelförmigen Querschnitt besitzt. Vorteilhaft ist bei diesem Nippel die Stutzenverstrebungsstruktur 3 mindestens im Stutzeninnenraum 8b des sichelförmigen Schlauchlumeneinsteckstutzens 2b vorgesehen, wiederum z.B. in Form der Stützstrebe 3a. Da der andere Schlauchlumeneinsteckstutzen 2a aufgrund seines kreisförmigen Querschnitts bereits von sich aus relativ druckstabil ist, kann dort das Einbringen einer Stützstrebe oder dergleichen entfallen. Auch in dieser Ausführungsvariante liegen die beiden Schlauchlumeneinsteckstutzen 2a, 2b innerhalb der kreisförmigen Begrenzungslinie 10, was die fluiddichte Verpressung des Nippels 17 mit dem Mehrlumenschlauchkörper 14 mittels der Presshülse 18 begünstigt.

Während bislang primär Zweilumenausführungen für den Mehrlumenschlauchkörper 14 und den hierzu passenden Nippel 17 erläutert wurden, veranschaulicht Fig. 16 in der Draufsicht von Fig. 15 einen Nippel zum Anschluss eines nicht gezeigten Dreilumenschlauchs mit drei sektorförmig in Umfangsrichtung nebeneinanderliegend angeordneten Schlauchlumina. Der Nippel weist in diesem Fall drei Schlauchlumeneinsteckstutzen 2a, 2b, 2c mit sektorförmigem Querschnitt auf, die in Umfangsrichtung nebeneinander innerhalb der kreisförmigen Begrenzungslinie 10 angeordnet sind. In jedem der von den drei Stutzen 2a, 2b, 2c gebildeten Stutzeninnenräume 8a, 8b, 8c ist jeweils eine radial verlaufende Stützstrebe 3a als Stutzenverstrebungsstruktur 3 angeordnet. Durch den Nippel erstrecken sich entsprechend drei getrennte Fluidführungen 4a, 4b, 4c hindurch, so dass er als Anschluss- bzw. Kupplungsmittel für einen Dreilumenschlauch zur dreikanaligen Fluidführung geeignet ist.

Wie die gezeigten und die weiteren oben erläuterten Ausführungsbeispiele deutlich machen, stellt die Erfindung in vorteilhafter Weise einen Mehrlumenschlauchanschlussnippel und einen damit ausgerüsteten Mehrlumenschlauch zur Verfügung, wobei der Nippel mit relativ geringem Aufwand gefertigt und mit einem passenden Mehrlumenschlauchkörper fluiddicht gekoppelt werden kann. Der Nippel und der Mehrlumenschlauch sind insbesondere für sanitäre Anwendungen geeignet, jedoch auch für nichtsanitäre Anwendungen, bei denen Bedarf an einer mehrkanaligen Fluidführung besteht.

## Patentansprüche

1. Mehrlumenschlauchanschlussnippel, insbesondere für einen Anschluss eines sanitären Mehrlumenschlauchs, mit
- einem Nippelbasisabschnitt (1), durch den sich eine Mehrzahl von getrennten Fluidführungen (4a, 4b) jeweils zwischen einer ersten und einer zweiten Nippelanschlussseite (5, 6) hindurch erstrecken,
- einer Mehrzahl von mit dem Nippelbasisabschnitt einteiligen Schlauchlumeneinsteckstutzen (2a, 2b), die sich an der ersten Nippelanschlussseite (5) nebeneinander unter Belassung eines zwischenliegenden Schlauchlumenwandaufnahmeraums (7) erstrecken, wobei ein Stutzeninnenraum (8a, 8b) jedes der Schlauchlumeneinsteckstutzen zu jeweils einer der Fluidführungen gehört und axial ausmündet,
**dadurch gekennzeichnet, dass** der Mehrlumenschlauchanschlussnippel eine Stutzenverstrebungsstruktur (3) im Stutzeninnenraum wenigstens eines der Schlauchlumeneinsteckstutzen aufweist.

2. Mehrlumenschlauchanschlussnippel nach Anspruch 1, wobei die Stutzenverstrebungsstruktur einteilig mit den Schlauchlumeneinsteckstutzen gebildet ist.

3. Mehrlumenschlauchanschlussnippel nach Anspruch 1 oder 2, wobei die Stutzenverstrebungsstruktur in wenigstens einem der Stutzeninnenräume eine Stützstrebe (3a) beinhaltet, die sich mit radialer Hauptrichtungskomponente zwischen zwei radial gegenüberliegenden Wandabschnitten (9a, 9b) des betreffenden Schlauchlumeneinsteckstutzens erstreckt.

4. Mehrlumenschlauchanschlussnippel nach einem der Ansprüche 1 bis 3, wobei die Schlauchlumeneinsteckstutzen innerhalb einer kreis- oder ovalförmigen Begrenzungslinie (10) angeordnet sind.

5. Mehrlumenschlauchanschlussnippel nach Anspruch 4, wobei die Schlauchlumeneinsteckstutzen mit sektorförmigem Querschnitt in Umfangsrichtung nebeneinander innerhalb der kreis- oder ovalförmigen Begrenzungslinie angeordnet sind.

6. Mehrlumenschlauchanschlussnippel nach einem der Ansprüche 1 bis 5, wobei eine erste der Fluidführungen an der zweiten Nippelanschlussseite axial ausmündet und eine zweite der Fluidführungen an der zweiten Nippelanschlussseite radial ausmündet.

7. Mehrlumenschlauchanschlussnippel nach Anspruch 6, wobei der Nippelbasisabschnitt an der zweiten Nippelanschlussseite einen konischen Bereich (11) aufweist, an dem die zweite Fluidführung radial ausmündet und von dem aus sich axial ein Nippelanschlussstutzen (12) erstreckt, durch den die erste Fluidführung axial ausmündet.

8. Mehrlumenschlauch, insbesondere sanitärer Mehrlumenschlauch, mit
- einem Mehrlumenschlauchkörper (14) mit einer Mehrzahl von getrennten Schlauchlumina (15a, 15b) und
- einer Anschlusseinheit (16) an einem Ende (14a) des Mehrlumenschlauchkörpers,
- wobei die Anschlusseinheit einen Mehrlumenschlauchanschlussnippel (17) nach einem der Ansprüche 1 bis 7 aufweist, der mit seinen Schlauchlumeneinsteckstutzen (2a, 2b) in jeweils eines der mehreren Schlauchlumina des Mehrlumenschlauchkörpers eingesteckt ist, und
- wobei die Anschlusseinheit eine Presshülse (18) aufweist, die den Mehrlumenschlauchkörper in einem die eingesteckten Schlauchlumeneinsteckstutzen aufnehmenden Endbereich gegen diese anpressend umgibt.

9. Mehrlumenschlauch nach Anspruch 8, wobei der Nippelbasisabschnitt einen radial nach außen abstehenden Anschlagflansch (13) aufweist, gegen den die Presshülse und/oder das Ende des Mehrlumenschlauchkörpers axial anliegt, und die Anschlusseinheit eine Überwurfanschlussmutter (19) aufweist, die sich mit einer Anschlagschulter (19a) gegen den Anschlagflansch abstützt.

## Claims

1. Multi-lumen hose connector nipple, preferably for connecting a sanitary multi-lumen hose, comprising
- a nipple basic section (1) through which a plurality of separate fluid conduits (4a, 4b) extend in each case between a first and a second nipple connector side (5, 6),
- a plurality of hose lumen plug-in sockets (2a, 2b) integral with the nipple basic section, which sockets extend on the first nipple connector side (5) juxtaposed with an intermediate hose lumen wall accommodation space (7) left therebetween, wherein a socket interior space (8a, 8b) of each of the hose lumen plug-in sockets is assigned to a respective one of the fluid conduits and opens out axially,
**characterized in that**
- the multi-lumen hose connector nipple comprises a socket strutting structure (3) within the socket interior space of at least one of the hose lumen plug-in sockets.

2. Multi-lumen hose connector nipple according to claim 1, wherein the socket strutting structure is integral with the hose lumen plug-in socket.

3. Multi-lumen hose connector nipple according to claim 1 or 2, wherein the socket strutting structure includes a support strut (3a) in at least one of the socket interior spaces, which strut extends with a radial main direction component between two radially opposite wall sections (9a, 9b) of the corresponding hose lumen plug-in socket.

4. Multi-lumen hose connector nipple according to any one of claims 1 to 3, wherein the hose lumen plug-in sockets are arranged within a circular or oval boundary line (10).

5. Multi-lumen hose connector nipple according to claim 4, wherein the hose lumen plug-in sockets are arranged juxtaposed within the circular or oval boundary line with a sector-shaped cross section in the circumferential direction.

6. Multi-lumen hose connector nipple according to any one of claims 1 to 5, wherein a first one of the fluid conduits opens out axially on the second nipple connector side and a second one of the fluid conduits opens out radially on the second nipple connector side.

7. Multi-lumen hose connector nipple according to claim 6, wherein the nipple basic section has a conical region (11) on the second nipple connector side, on which conical region (11) the second fluid conduit opens out radially and where a nipple connector socket (12) extends axially, through which socket (12) the first fluid conduit opens out axially.

8. Multi-lumen hose, preferably sanitary multi-lumen hose, comprising
- a multi-lumen hose body (14) including a plurality of separate hose lumens (15a, 15b), and
- a connector unit (16) on one end (14a) of the multi-lumen hose body,
- wherein the connector unit has a multi-lumen hose connector nipple (17) according to any one of claims 1 to 7, which is inserted with the hose lumen plug-in socket (2a, 2b) thereof in a corresponding one of the plurality of hose lumens of the multi-lumen hose body, and
- wherein the connector unit has a ferrule (18) surrounding the multi-lumen hose body in an end region accommodating the inserted hose lumen plug-in sockets and pressing against them.

9. Multi-lumen hose connector nipple according to claim 8, wherein the nipple basic section has a stop flange (13) protruding radially outwards, against which flange the ferrule and/or the end of the multi-lumen hose body abut axially, and the connector unit has a connector union nut (19) which rests with a stop shoulder (19a) against the stop flange.

## Revendications

1. Embout de raccordement pour tuyau flexible à passages multiples, en particulier pour le raccordement d'un tuyau flexible sanitaire à passages multiples, comprenant
- une portion de base d'embout (1) à travers laquelle s'étendent une pluralité de guides de fluide séparés (4a, 4b), chacun entre un premier et un deuxième côté de raccordement d'embout (5, 6),
- une pluralité de tubulures d'enfichage de passage de tuyau (2a, 2b) réalisées d'un seul tenant avec la partie de base de l'embout, qui s'étendent côte à côte sur le premier côté de raccordement d'embout (5) en laissant un espace de réception de paroi de passage de tuyau (7) entre eux, un espace intérieur de tubulure (8a, 8b) de chacune des tubulures d'enfichage de passage de tuyau appartenant respectivement à l'un des guides de fluide et débouchant axialement,
**caractérisé en ce que** l'embout de raccordement pour tuyau à passages multiples comprend une structure d'entretoisement de tubulure (3) dans l'espace intérieur de l'une au moins des tubulures d'enfichage de passage de tuyau.

2. Embout de raccordement pour tuyau à passages multiples selon la revendication 1, dans lequel la structure d'entretoisement de tubulure est réalisée d'un seul tenant avec les tubulures d'enfichage de passage de tuyau.

3. Embout de raccordement pour tuyau à passages multiples selon la revendication 1 ou 2, dans lequel la structure d'entretoisement de tubulure comprend, dans l'un au moins des espaces intérieurs de tubulure, une entretoise de soutien (3a) qui s'étend avec une composante directionnelle principale radiale entre deux portions de paroi (9a, 9b), radialement opposées l'une à l'autre, de la tubulure d'enfichage de passage de tuyau correspondante.

4. Embout de raccordement pour tuyau à passages multiples selon l'une des revendications 1 à 3, dans lequel les tubulures d'enfichage de passage de tuyau sont disposées à l'intérieur d'une ligne de délimitation circulaire ou ovale (10).

5. Embout de raccordement pour tuyau à passages multiples selon la revendication 4, dans lequel les tubulures d'enfichage de passage de tuyau, ayant une section transversale en forme de secteur, sont disposées côte à côte en direction circonférentielle à l'intérieur de la ligne de délimitation circulaire ou ovale.

6. Embout de raccordement pour tuyau à passages multiples selon l'une des revendications 1 à 5, dans lequel un premier desdits guides de fluide débouche axialement sur ledit deuxième côté de raccordement d'embout, et un deuxième desdits guides de fluide débouche radialement sur ledit deuxième côté de raccordement d'embout.

7. Embout de raccordement pour tuyau à passages multiples selon la revendication 6, dans lequel la portion de base d'embout présente, sur le deuxième côté de raccordement d'embout, une zone conique (11) au niveau de laquelle le deuxième guide de fluide débouche radialement et à partir de laquelle s'étend axialement une tubulure de raccordement d'embout (12) à travers lequel le premier guide de fluide débouche axialement.

8. Tuyau flexible à passages multiples, en particulier tuyau flexible sanitaire à passages multiples, comportant
- un corps de tuyau à passages multiples (14) présentant une pluralité de passages de tuyau séparés (15a, 15b), et
- une unité de raccordement (16) à une extrémité (14a) du corps de tuyau à passages multiples,
dans lequel
- l'unité de raccordement présente un embout de raccordement pour tuyau à passages multiples (17) selon l'une des revendications 1 à 7, qui est enfiché avec ses tubulures d'enfichage de passage de tuyau (2a, 2b) dans respectivement l'un desdits plusieurs passages de tuyau du corps de tuyau à passages multiples, et
- l'unité de raccordement présente une douille de pression (18) qui, dans une zone d'extrémité recevant les tubulures d'enfichage de passage de tuyau enfichées, entoure le corps de tuyau à passages multiples en le pressant contre celles-ci.

9. Tuyau flexible à passages multiples selon la revendication 8, dans lequel la portion de base de l'embout présente une bride de butée (13) faisant saillie radialement vers l'extérieur, contre laquelle la douille de pression et/ou l'extrémité du corps du tuyau à passages multiples s'appuie axialement, et l'unité de raccordement présente un écrou-raccord (19) qui s'appuie contre la bride de butée par un épaulement de butée (19a).
